# EUROPEAN PATENT APPLICATION

(11) **EP 1 968 003 A1**
(43) Date of publication of application: **10.09.2008**
(21) Application number: 08152476.1
(22) Date of filing: 07.03.2008
(51) Int. Cl.: G06Q 30/00

(54) **Charging or billing depending on the reaction to an advert received by a user**

(30) Priority: 15.05.2007 GB 0709330; 09.03.2007 WO PCT/FI2007/050131
(71) Applicant: CVON Innovations Limited, London W1F 7BY (GB)
(72) Inventor: Aaltonen, Janne, 20900, Turku (FI); Ahopelto, Timo, 00120, Helsinki (FI); Antikainen, Ismo, 02430, Masala (FI)
(74) Representative: McCann, Heather Alison

(57) **Abstract**

System and method for running advertising campaigns for mobile phones. Monitoring the reaction to the received advert and billing the advertiser depending on the reaction. Also includes forwarding the call to a respective telephone number of the advertiser when the subscriber reacts to the advert.
An apparatus receives a communication from a user address to a sender address and checks from a database whether a pair of the user address/number from which the communication is sent and the address/number at which said communication is received, match to a previously defined pair of sender address/number and user address/number stored in the database. Each of the previously defined pairs of user and sender addresses/numbers is associated with a triggering message previously sent to the respective user address/number. If a matching previously defined pair of addresses/numbers is found, the communication is routed to a predetermined destination; the received communication may be metered according to a usage rule defined for the matching pair of addresses/numbers in the database.

## Description

### Field of the Invention

The invention relates generally to communications systems, and particularly to controlling user communications in a communications system.

### Background of the Invention

Mobile marketing is considered by advertisers as the next new channel to reach direct to the user by utilizing the core assets and characteristics of the mobile media: it being personal, "always on", mobile and naturally forming groups of people who communicate actively with each other. These characteristics combined with social networks -based marketing approach of the Internet could form a very powerful base to execute marketing strategies.

In general, mobile marketing and advertising can be divided into the following four categories:
a) **Mobile Marketing**: The systematic planning, implementing and control of a mix of business activities intended to bring together buyers and sellers for the mutually advantageous exchange or transfer of products where the primary point of contact with the consumer is via their mobile device.
b) **Mobile Advertising**: The paid, public, non-personal announcement of a persuasive message by an identified sponsor; the non-personal presentation or promotion by a firm of its products to its existing and potential customers where such communication is delivered to a mobile phone or other mobile device. Examples of mobile advertising would include: WAP Banner ads, mobile search advertising, mobile video bumpers, and interstitial ads in on device portals.
c) **Mobile Direct Marketing**: Sales and promotion technique in which the promotional materials are delivered individually to potential customers via the potential customer's mobile phone or other mobile device. Examples of mobile direct marketing include the sending of SMS, MMS or WAP push messages, Bluetooth messaging and other interrupt based marketing to mobile phones or other mobile devices.
d) **Mobile customer relation management (CRM)**: Combination of all the above in a manner that establishes a long-term, engaging relationship between the customer and the promoting company.

Today's mobile marketing is usually mostly based on push campaigns to opt-in consumer mobile number database, or pull campaigns that acquire mobile phone numbers from consumers. The most typical example of the pull campaign is the "text-to-win" campaign were, e.g., a soft drink bottle contains a short code to be sent via text message to the certain number. In return, the consumer receives a notification if they have won with the selected marketing message or series of messages being broadcasted to their mobile phones. Another popular method is direct advertisement done using text and picture messaging.

The value of the advertisement campaign is significantly higher if there is way to obtain feedback on sent advertisements from the consumers. The feedback can be direct feedback, such as answering to a query, or indirect, such as purchasing said product or service using coupon or making a phone call.

When an advertiser is selecting the method to use, the key criterion is the estimated impact of the selected marketing activity. Usually the impact is estimated based on (1) how well the desired target audience is identified and reached, and (2) target audience's expected response to the delivered marketing message. Ultimately, marketing impact turns into the advertiser ROI measured via e.g. new product purchases based on the executed campaign, or measured increase in brand recognition or loyalty.

US2004/0128158 discloses a method for booking reservations in which a client is given a number of questions in form of options the client chooses between. The different questions or options sent the client have different A subscriber numbers so as to enable differentiate between answers based which number the client is sending replies to. As a result, the service provider is able to find out whether the client has replied to a certain inquiry and what the answer was.

WO0041415 discloses a method for providing a voting service by utilizing short messages in the place of voice calls to a voting service number, so as to avoid congestion and capacity problems of the service number.

There are telephone numbers with certain prefix, such as "0800", available which provide a toll free calling i.e. customers can call to that number without charge, or with same charge throughout the country. A company can hire a "0800xxxxxx" number as the company's service number in addition to or instead of the "ordinary" telephone number.

### Summary of the Invention

In accordance with at least one embodiment of the invention, methods, systems and software are provided for supporting or implementing functionality to provide an output, as specified in the independent claims. This is achieved by a combination of features recited in each independent claim. Accordingly, dependent claims prescribe further detailed implementations of the present invention.

According to an aspect of the invention, there is provided a method for routing communications in a telecommunications network, comprising:
sending a plurality of messages to a plurality of user terminals, each of the messages containing a network identifier for triggering a communication;
for each sent message, creating and storing an association between a user terminal to which the message is sent and a respective network identifier;
receiving communications from the user terminals; and,
when a communication is received at a network location corresponding to a network identifier and from a user terminal for which a said association is stored, routing the communication to a predetermined destination.

According to embodiments of the invention, prompting messages may originate (push message) from a centralized system and/or from other users, and/or a prompting message may be pulled by a terminal (a pull message).

Embodiments of the present invention provide customized routing of communications in a flexible manner and facilitate flexible individual billing of the communications and services, while using a limited address/number space for providing the services. For example, some of the users may be billed for sending a message to a given sender number while some other user are not billed for sending a message to the same given sender number; additionally or alternatively the resulting action may vary depending on the user. When applied in the field of mobile advertising, the present invention enables a billing balance of a user to be adjusted if the user responds to an advertisement message in one or more specified ways.

### Brief Description of the Drawings

In the following the invention will be described in greater detail by means of exemplary embodiments with reference to the attached drawings, in which
Figure 1 is a block diagram illustrating a high-level architecture of an exemplary communications system wherein the principles of the present invention may be applied;
Figure 2 is a block diagram illustrating an exemplary monitoring arrangement according to the present invention;
Figure 3 is block diagram illustrating an exemplary configuration of the VAS gateway:
Figure 4 is a block diagram illustrating another exemplary monitoring arrangement according to the present invention;
Figure 5 is a signal chart illustrating the operation in the exemplary arrangement of Figure 4;
Figure 6 is a flow chart illustrating an example of creating a campaign and sending advertisement messages to users;
Figure 7 is a flow chart illustrating an example of an operation of a user terminal; and
Figure 8 is a flow chart illustrating an example of an operation of the answer monitoring block.

### Detailed Description of the Invention

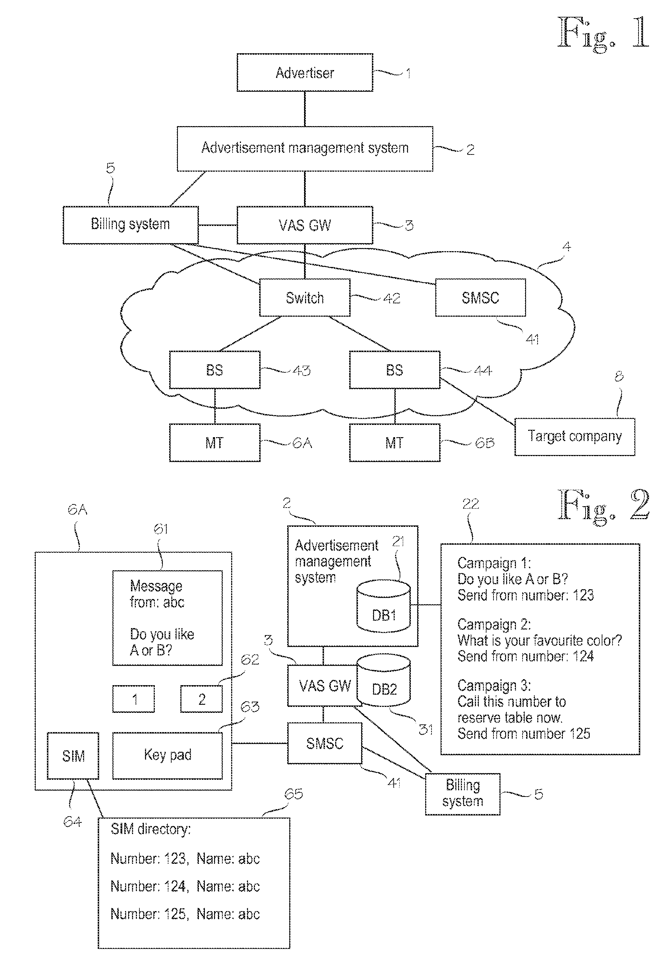

Figure 1 is a block diagram illustrating a high-level architecture of an exemplary communications system wherein the principles of the present invention may be applied. Reference numeral 6 denotes a mobile terminal. The mobile terminal 6 may be a mobile phone, a personal digital assistant (PDA), a multimedia computer, a personal computer, a lap top, etc., or generally any terminal capable of access in services, such as content download, web browsing, streaming, Wireless Application Protocol (WAP) browsing.

An advertiser 1 is a party that wants to advertise his products or services to customer. The advertiser to defines prompting/advertisement messages, for example in form of data, text, pictures, audio, video, links, HTML, XML, and/or XHTML to an advertisement management system 2. The advertisement system 2 manages advertising campaigns and may comprise an advertisement database 21 (Figure 2) which may contain all relevant information for the advertisement campaign to be run. For example, the database 21 may store campaign parameters 22, such as advertisement messages, a user profile, preferences of when to send messages, to which target group, on which format, a target price level of an advertisement, a target feedback level of the advertisement, a target audience, demographics of a target audience, a duration of a advertisement campaign, cost per an advertisement, type of an advertisement, a sociological background of a target audience, age, sex, a target telephone type, an income level; status of a user, a location of a user; historical data of a user's behavior, historical data on a behavior of a profile of users, information of sent direct advertisement to a user, information of content vouchers or coupons sent to a user, codes of vouchers or coupons sent to a user, a time of a day or a week or a month or a date. The advertisement system 4 may also be used to maintain billing rules of the sponsoring communications and/or service access. The advertisement management system 2 may also have tools for the advertiser 1 to define a campaign so that all or some of campaign parameters and the rules may be set, cancelled, modified, updated, or otherwise processed by the advertiser 1. The operator of the advertisement management system 2 is typically a party different from the advertiser 1, e.g. an advertisement delivery company in business of delivering advertisements from a plurality of advertisers 1.

The advertisement is delivered to users 6A and/or 6B via communication network 4. The communication network 4 can be any cellular, broadcast, wide area, local area or Internet network. Examples of cellular network technologies include but are not limited to GSM (Global System for Mobile communication), WCDMA (Wideband CDMA), CDMA (Code Division Multiple Access), GPRS (General Packet Radio Service), UTRAN (UMTS Radio Access Network), UMTS (Universal Mobile Telecommunications System), MBMS (Multicast Broadcast Multimedia System). Examples of other network technologies include but are not limited to local area networks, such as Wireless Local area networks (WLAN), BlueTooth (BT), and other technologies, such as WiMax (Worldwide Interoperability for Microwave Access), Broadcasting over cellular, Broadcasting over DVB-H (Digital Video Broadcasting - Handhelds), ISDB-T (Terrestrial Integrated Services Digital Broadcasting), DMB (Digital Multimedia Broadcasting). The communication network 4 may also be provided by any generic Internet access using any transport methods. The communication network 4 can be also a combination of different communication network technologies.

The type and format of an advertisement message as well as the delivery method used may be selected among those available in the communication network 4 employed. Such message formats and delivery methods may include but are not limited to messaging services, such as short message service (SMS), multimedia message service (MMS), Instant Message Service (IMS), electronic mail, or browsing services, such as Wireless application protocol (WAP), Word Wide Web (WWW), or other data services, etc.

There may also be provided a value added service gateway (VAS GW) 3 that connects the communication network 4 or some of the elements thereof to the advertisement management system 2. The VAS gateway 3 may also be connected to a billing system 5. The VAS gateway 3 may include an advertisement sending block 32 (Figure 2) for sending advertisement messages to the customers through the communications network 4. The VAS gateway 3 may also include a database 31, an answer monitor block 33, and input/output block 34 which will be described below.

A billing system 5 represents any real-time billing system or close-to-real-time billing system that may be employed for monitoring the usage of the communication services in the communications network 4. Services, i.e. communication events, may include but are not limited to voice, messaging services (Short Message Service, Multimedia Message Service, Instant Message Service, Electronic mail services), video telephony services, push to talk services, data services such as Internet or Wireless Application Protocol (WAP) browsing services, content usage (television, radio, video) services, download services. The billing system 5 may also refer to any 3^{rd} party offered service running in a server or a computer system, such as a proxy server or a web server which offers services to mobile users. The billing system 5 may receive charging records from other network elements, each charging record comprising all information required for the billing of a given communication by a user in the communications network, possibly excluding price information. A charging record may specify the content and format of the file that is delivered to the billing system 5. Charging records are often referred to as call detail records (CDRs) or charging data records, or service detail records (SDRs) in value added services. The charging records may include not only the user's calling or originating number/address or similar identity but also a destination of the communication, for example, a called telephone number of a communication, an Uniform Resource Locator (URL) or similar network address accessed via the communication network 4, a telephone number or network address number to which a message is sent, etc. The information can be delivered to the billing system 5 from any communication network element handling a given communication, such as via a short message service center (SMSC) handling SMS messages of a user, a multimedia message service center (MMSC) handling MMS messages of a user, Wireless application protocol gateway (WAP-GW) handling a WAP communications of a user, and an Internet access point (Internet AP), a serving GPRS support node (SGSN), a gateway GPRS support node (GGSN), etc.

In the example of Figure 1, the communication network 4 comprises a cellular network is shown with exemplary network elements, such as a base stations (BSs) 43 and 44, a Short Message Service Center (SMSC) 41 and a call switch 43.

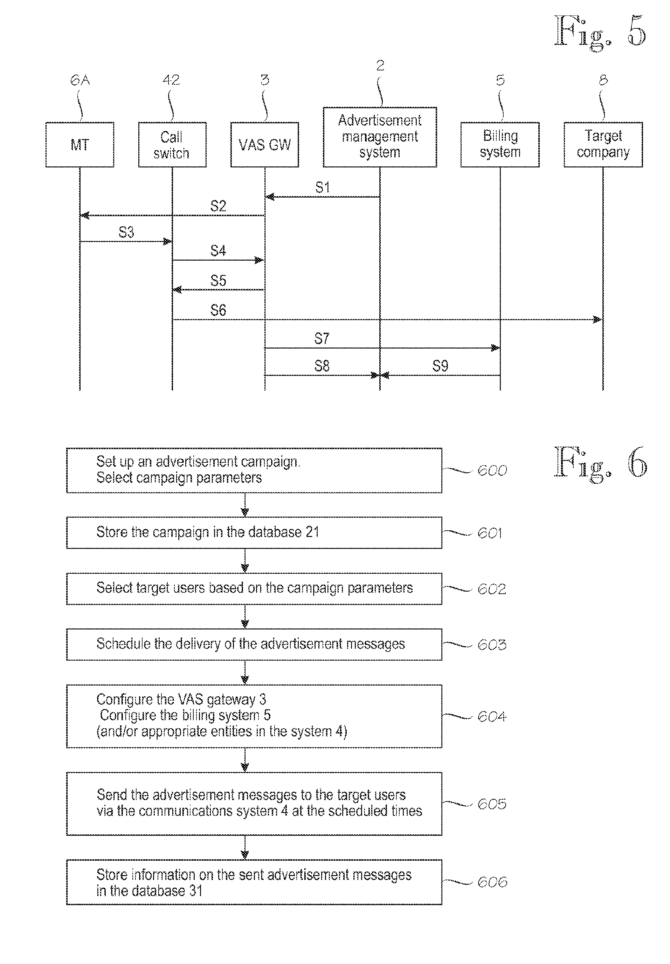

Referring now to Figure 2, an advertisement message delivery according to some embodiments of the invention is now illustrated by means of an example. The advertiser sets up the advertisement campaign in the advertisement management system 2 (step 600 in Figure 6). The campaign setup may include selection of one or more campaign parameters, e.g. a target user profile or a given user or a given group of users (e.g. subscriber numbers), an actual advertisement, an advertised/sponsored destination (e.g. telephone number/internet site), a sponsoring/campaign budget, status of the user, a list of web sites and services which are sponsored to which users, an allowed number of accesses to a sponsored content, a number of accesses already made to a sponsored content, a location of a user, historical data of a user's behavior, historical data on a behavior of a profile of users, information of sent direct advertisement to a user, information of the content vouchers/coupons sent to a user, codes of vouchers/coupons sent to a user, etc. and/or other appropriate campaign parameters 22 which are stored in the database 21 (step 601 in Figure 6). An information type according to an embodiment of the invention is a sender address, such as a telephone number (e.g. MSISDN, Mobile Subscriber Identification Number) that is associated to each marketing message as a message ID. The sender address/number indicates the address/number which is indicated as a source or a sender or a calling party A in a given advertisement message.

In the example shown Figure 2, campaign parameters for three campaigns are defined and stored in the database 21. In the campaign 1, the advertisement message is "Do you like A or B?" and the allocated sender MSISDN in the message is "123". The campaign parameters may also define an action be performed upon a target user communicating back to the sender number, e.g.: "Register the answer and/or report and/or store it for further analysis". The campaign parameters may also define a target audience, e.g.: "User profile A". The campaign parameters may also define billing rules/actions related to a received reply communication, e.g.: "Adjust credit of the target user ...". The adjustment may include, for example, the communication and/or a defined action free of charge, the communication and/or the defined action with a discounted charge, or the communication and/or the defined action with an extra benefit. The campaign rules may also define rules/actions relating to advertiser invoicing, e.g.: If the communication is an answer received from a target audience to the question, charge the advertiser according to agreed pricing principles".

In the campaign 2, the advertisement message contains a different question: "What is your favorite color?" and the message is defined to be sent from a sender number "124". Other campaign parameters may be similar to or different from those of the campaign 2.

In the campaign 3, the campaign parameters may include a message/campaign text: "Call us to reserve a table", a target audience: "All in the area", and a sender number: 125. An action to be performed upon a target user calling back to the sender number may be: "Route a received reply call to the telephone number +358222222" of the target company 8 or another third party. The campaign parameters may further define billing rules/actions related to a received reply call, e.g.: If a call is received from a target audience to the number "125", then adjust the balance of the target audience in the billing system 5 accordingly. The campaign rules may also define rules/actions relating to advertiser invoicing, e.g.: If a call is received from a target audience to a target company then charge the advertiser according to agreed pricing principles.

According to an embodiment of the invention, the advertiser 1 may configure the advertisement management system 2 to send advertisement messages directly to given users, e.g. to predetermined addresses or telephone numbers.

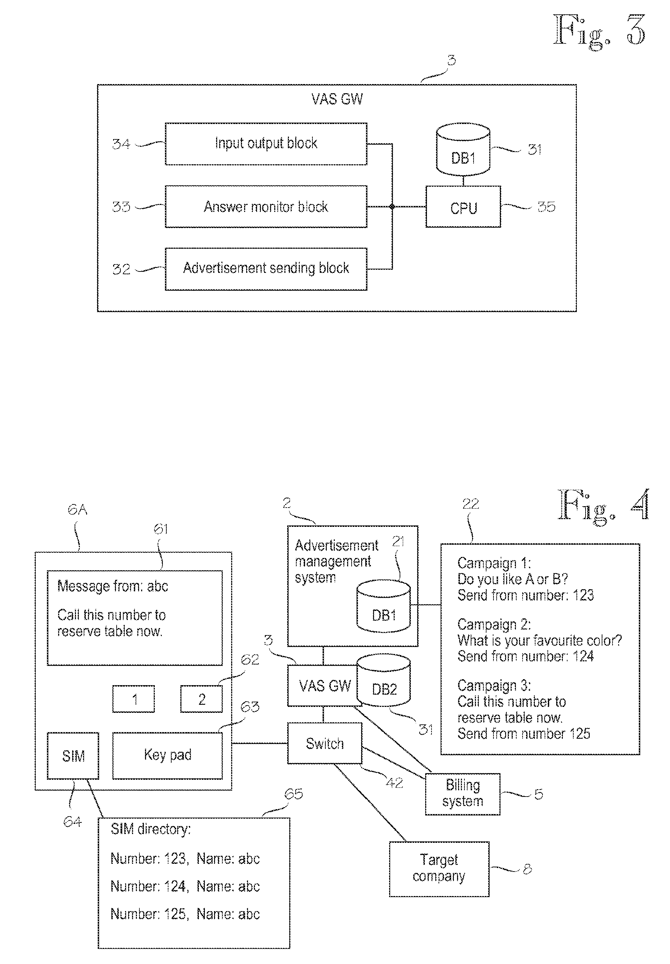

Based on the user profile A and/or other campaign parameters, the advertisement management system 2 may determine to which given user(s), i.e. the target user(s), the advertisement is to be delivered (step 602 in Figure 6). For example, a user 6A with subscriber number +35840111111 matches to the user profile A of the campaign 1, and therefore sending of the advertisement is scheduled at 12:00 a.m. at a given day (step 603 in Figure 6). On the other hand, a user 6B with subscriber number +35840222222 does not match to the user profile A, and is not selected as a target user. In an embodiment where the advertisement message is delivered via the VAS gateway 3, the advertisement management system 2 may program the campaign to the advertisement-sending block 32 of the VAS gateway for execution via the input/output block (step 604 in Figure 6). The programming may include the identity of the user(s), such as the subscriber number, the network address, etc., to which the advertisement is to be sent, and the actual advertisement. Also the billing system 5 and/or appropriate network entities of the communication system 4 may be configured according to the campaign parameters at this point. The VAS gateway sends the advertisement message(s) via the communications network 4 to the target user(s) at defined times (step 605 in Figure 3). After sending the message(s), the VAS gateway 3 may store in the database 31 at least information identifying the target user(s), such as the subscriber number, the network address, etc., to which the advertisement was sent, and the sender address/number from which the advertisement was sent, and the action to be performed, and any other appropriate campaign parameters (step 606 in Figure 6). In an embodiment of the invention, the whole advertisement message is stored also after sending the advertisement. The advertisement message may be originated (push message) from advertisement system as in the example above, or it may be pulled by the terminal (a pull message).

As described above, the advertisement message can be delivered with any type message, such as an SMS, an MMS, a Push WAP message or a WAP page or a Web page containing a link, etc. In the example shown in Figure 2, the advertisement message may be an SMS based message sent from the message delivery component 32 via the SMSC 41 to the mobile terminal 6A at the scheduled time.

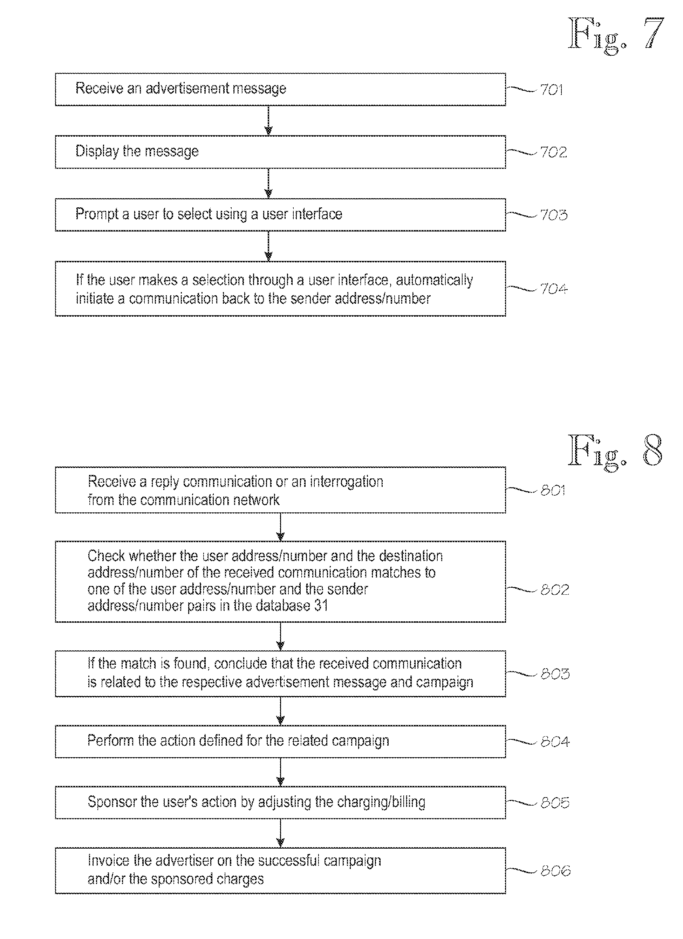

The mobile terminal of the target user 6A receives the advertisement message (step 701 in Figure 7) that is displayed to the user via a user interface, such as a display 61 (step 702). In the example in Figure 2, the text "Do you like A or B" of the campaign 1 is displayed. An application in the mobile terminal 6A may also prompt a user to select A or B as an answer scenario by means of soft keys 62 or a keypad 63 (step 703). If the user makes a selection, the application may automatically initiate a reply communication back to the sender address/number (step 703). In the example shown in Figure 2, the user activates the link through the user interface, e.g. using soft keys 62 or a keypad 63, an application in the mobile terminal automatically initiates a communication to the telephone number 123.

A switch 42 or a short message service center SMSC 41, or any other appropriate network element (a multimedia message service center MMSC, Wireless application protocol gateway WAP-GW, and an Internet access point, a serving GPRS support node SGSN, a gateway GPRS support node GGSN, a mobile switching center MSC, etc.), may provide a charging record for the communication, and the charging record may delivered to the billing system 5. The billing system may also provide the charging record further to the VAS gateway. Alternatively, the charging record may be provided directly or merely to the VAS gateway 3.

The switch 42 or the SMSC 41 may be configured to route to the VAS gateway all calls or short messages addressed to the sender address/number space of the VAS gateway 3, or to interrogate the VAS gateway for further control in the case of receiving such calls or short messages. The latter approach may be implemented as an intelligent network service, wherein the switch 42 or the SMSC 41 functions as an IN service switching point and the VAS gateway functions as an IN service control point. According to an embodiment of the invention, the answer monitoring functions of the VAS gateway 3 may be distributed to the appropriate network element, such the switch 42 or the SMSC 41. In the present example, let us assume that the reply communication in the campaign 1 is a SMS or MMS or like message, and the message is forwarded to the VAS gateway 3 by the appropriate network element.

The VAS gateway 3 receives the reply communication, e.g. the reply message, or an interrogation from the communication network 4 (step 801 in Figure 8). The answer monitoring block 33 in the VAS gateway 3 is arranged to monitor and analyze the reply communications based on the campaign and/or advertisement message data stored in the database 31. More specifically, if the user address/number and the network location associated with the network identifier of the received communication matches with one of the user address/number and the sender address/number pairs of the sent advertisement messages stored in the database 31 (step 802), the answer monitoring block 33 concludes that the reply communication is related to the respective advertisement message and the respective campaign (step 803). The answer monitoring block 33 may check also other criteria, e.g. that the reply communication occurred within a predetermined period of time from the sending moment of the advertisement. In the example described herein, the reply took place relatively close to time of sending the advertisement (during the same day), and the answer monitoring block registers the communication as a successful response to the sent advertisement message. Then the action defined for the matching campaign is performed (step 804). In this example, the user terminal 6A has answered to the question in campaign 1, and the defined action may be to register the answer and report it to the advertisement system 2 wherein it is stored in the database 21 for further analysis and use, such as statistics, billing of the advertiser 1, etc. In an embodiment of the invention, the registered successful response may result in sponsoring the communication and/or a related action to the user (step 805 in Figure 8). The sponsoring may comprise one or more of following adjustments of the charging: a communication and/or a related action free of charge; a communication and/or a related action with a discounted charge; a communication and/or a related action with an extra benefit or service. For example, the VAS gateway 3 may adjust the charging of the user of the terminal 6A according to the billing rules defined for this user in this campaign. Let us assume that normally, when a user sends a message in the network 4, his/her balance in the billing system 5 may be debited with e.g. 5 credit points (e.g. 0.1€) per a message. Now in this example, the VAS gateway 3 may notify the billing system 5 to adjust credit of the user 6A based on the defined rules, e.g. to charge nothing or only part of the communication cost, or to add credit to the user.

In a further embodiment of the invention, the billing system 5 may be configured beforehand not to invoice any of the actions resulting from the advertisement message to the user. For example, in the campaign 3 the routing action, i.e. the call to the target company number may not be invoiced. The billing rules can include further parameters, e.g. the time for which the billing is set to 0, the number of times the action can be obtained for free, etc.

In a further embodiment of the invention, since the comparison can verify that the sent advertisement message resulted in an answer, the success information in the answer monitoring block 33 can be used to further invoice the advertiser 1 on the successful campaign and/or the cost of communication and the related action.

Let us further assume that the user 6B sends a message to the same sender number 123. This message is forwarded to the answer monitoring block 33 in a manner similar to the information regarding the user 6A above. Since no advertisement message was sent to the user 6B, the answer monitoring block 33 will not find any matching pair of a user number and a sender number in the database. Therefore, the message from the user 6B is not registered as a successful response to the sent advertisement message. As result, the communication cost will not be subsidized or fully paid or sponsored by the advertiser. Nor is any related action performed. However, if some other or the same advertisement message were sent to the user 6B from the sender number, the reply communication from the user 6B would be processed according to the action and rules defined for that pair of the user number of the user 6B and the sender number 123.

Let us assume that also an advertisement message relating to the campaign 2 is sent from the sender number 124 to the user 6A. Thus, the different question: "What is your favorite color?" will be displayed on the display 61. Again, the user can answer to the question for example with the soft keys 62 or the keypad 63. If the user makes a selection, the application may automatically initiate a reply communication back to the sender number 124. Again, this reply communication may be forwarded to the answer monitoring block 33 which now checks whether if the user address/number and the destination address/number 124 of the received communication matches with one of the user address/number and the sender address/number pairs of the sent advertisement messages stored in the database 31 i.e. whether there is a stored association between a network identifier (e.g. a number or address) contained in a message previously sent to the user terminal and that user terminal. As the matching pair is found, the answer monitoring block 33 concludes that the reply communication is related to the respective advertisement message and the campaign 2. Now the reply communication results in the action defined for the user 6A in the campaign 2, and also billing rules defined for the campaign 2 are employed. Thus, different reply communications from the same user 6A are associated with different campaigns on the basis of the different sender numbers 123 and 124.

In all of the examples above the billing system 5 can be credited with predetermined amount of credit depending on the sender number to which the message is sent and from which user the message is sent. This allows a flexible billing with a limited address/number space. For example, some of the users can be billed from sending a message to a sender number while some other user are not billed from sending a message to the same sender number. The invention also allows, for example, sending messages, such as "Tell which one is better Coke or Pepsi and you get 10 free SMS?" In this scenario the sender number and the user number may be associated in the VAS gateway 3 to the action of adding 11 (10 + the answer) extra SMS to the user's balance in the billing system 5, if the answer is received.

Let us examine the campaign 3 with reference to Figures 4 and 5. In Figures 4 and 5, the same reference numerals refer to the same functions and structures as in Figures 1, 2 and 3. In step S1 in Figure 5, the advertisement management system 2 configures the VAS gateway 3 according to the campaign parameters 22 of the campaign 3, as described above regarding steps 600-604 of Figure 6. In step S2 of Figure 5, the VAS gateway 3 sends the advertisement message to the mobile terminal of the user 6A and stores the associated message information in the database 31, as described above regarding steps 605-606 in Figure 6.

The mobile terminal of the target user 6A receives the advertisement message (as described above regarding step 701 in Figure 7) that is displayed to the user via a user interface, such as a display 61 (as described above regarding step 702 in Figure 7). In the example of Figure 4, the text "Call us to reserve a table" of the campaign 3 is displayed. An application in the mobile terminal 6A may also prompt a user to make a call (e.g. "reply to sender") or to cancel the advertisement message by means of soft keys 62 or a keypad 63 in a similar manner as in step 703 in Figure 7. If the user chooses to make a call, e.g. by pressing the "reply to sender" soft key, or by dialing the sender number shown in the message, the mobile terminal may automatically initiate a call to the sender number 125 in a similar manner as in step 703 in Figure 7.

The switch 42 or any other appropriate network element may receive the reply call (step S3 in Figure 5) and then communicate with the VAS gateway 3 (step S4 in Figure 5). Then the procedure at the VAS gateway may proceed in manner described above with reference to Figure 8. More specifically, if the VAS gateway will find out the user number of the user 6A and the destination number 125 of the received call have a matching pair of the user number and the sender number 125 stored in the database 31. Therefore, the VAS gateway 3 concludes that the call is associated with the respective advertisement message and the campaign 3. Then the action defined for the user 6A in the campaign 3 is performed. The defined action is ""Route a received reply call to the telephone number +358222222". As a result, the VAS gateway 3 controls (step S5 in Figure 5) the switch 42 to route the call to the number +358222222, i.e. to the target company 8 (step S5 in Figure 5). The VAS gateway may also determine on the basis of the billing rules that the call should be free (i.e. a toll free number) for the particular caller 6A, and therefore the VAS gateway 3 may adjust the billing system 5 so that the call is not charged or it is compensated (step S7 in Figure 5). The VAS gateway 3 and/or the billing system 5 may generate a report to the advertisement management system 4 (steps S8 and/or S9 in Figure 5) for invoicing the advertiser 1. The advertiser 1 may be invoiced for example, for the whole call related cost, part of the cost, more than the cost, and/or an agreed price for the click-to-call service.

Thus, the present invention also allows providing a toll-free telephone number from a limited number space, because the same number can be at the same time to practically any number of different users and different third parties (e.g. target company) while the billing rules and other conditions can be defined individually for each pair of a user number and the sender number.

Similarly, the action may be routing an SMS message or other type of message to a further destination address, e.g. to download software, games, ringing tones, logos, news, weather forecasts, address information web pages, WAP pages, or any type of content from a service provider with a special price or free of charge. The offered service and the price can be set individually for each user by configuring the campaign parameters. In an embodiment of the invention, the action defined in the campaign parameters may directly be to provide a defined content for download with a defined price.

A reserved sender address/number space for the advertisement messages (and for the toll free calls and actions) can be of any range. In an embodiment of the invention, the sender addresses/numbers are allocated in round robin type of allocation scheme, i.e. allocating first all unused addresses/numbers in a sequence and then starting to allocate the same used addresses/numbers again in the same sequence. In another embodiment, a sender address/number can be reused soon as a reply communication has been received to this sender address/number. According to an embodiment of the invention, the allocation of a sender address to a user address may be cancelled according to a predetermined criterion. Such a predetermined criterion may comprise one or more of the following examples: cancelling after a predetermined period of time; cancelling after single a communication; cancelling after a predetermined number of communications; canceling at a given time of a day or a week or a month or at a given date; canceling after using a given amount of time for communication; canceling after transferring a given amount of data; canceling after using a given amount of money for communication.

To enable to show the same or similar number, according to an aspect of an embodiment of the invention, the directory 65 in the mobile terminal, typically in a subscriber identity module SIM, is configured to show the same or similar name to all numbers in the number space which is normally used to send the advertisement messages.

According to invention the SIM directory 65 is populated with number space which is normally used to send said advertisements. For example in Figure 2, the name "abc" of the operator is shown for all of the sender numbers 123, 124 and 125. In the case a mobile terminal does not allow giving the same name to different numbers, or does not show if there is conflict of having the same name for multiple numbers, an alternative way may be to program in the SIM names with "small" variations, such as 123 = abc, 124 = aBc, 125 = aabc.

The techniques described herein may be implemented by various means. For example, these techniques may be implemented in hardware (one or more devices), firmware (one or more devices), software (one or more modules), or combinations thereof. For a firmware or software, implementation can be through modules (e.g., procedures, functions, and so on) that perform the functions described herein. The software codes may be stored in any suitable, processor/computer-readable data storage medium(s) or memory unit(s) and executed by one or more processors/computers. The data storage medium or the memory unit may be implemented within the processor/computer or external to the processor/computer, in which case it can be communicatively coupled to the processor/computer via various means as is known in the art. Additionally, components of systems described herein may be rearranged and/or complimented by additional components in order to facilitate achieving the various aspects, goals, advantages, etc., described with regard thereto, and are not limited to the precise configurations set forth in a given figure, as will be appreciated by one skilled in the art.

Although in the examples above, the database 31, the advertisement sending block 32 and the answer monitoring block 33 are situated at a value added service gateway in many of the examples, the invention is not limited to this arrangement. The functionalities similar to the database 31, the advertisement sending block 32 and the answer monitoring block 33 may be embodied in a dedicated network entity, or in any appropriate existing network entity, within or outside the communication system 4, such as a short message service center (SMSC), a multimedia message service center (MMSC), Wireless application protocol (WAP) gateway (WAP-GW), an Internet access point (Internet AP), a WLAN access point (AP), a mobile switching center (MSC), a charging gateway, a billing gateway, an advertisement management system, a server, or in a control intelligence associated with such network entities, such as in a service control point (SCP) of an intelligent network (IN). Moreover, the functionalities similar to the database 31, the advertisement sending block 32 and the answer monitoring block 33 may not be embodied in a single network entity but they may be distributed to two or more network entities.

It will be obvious to a person skilled in the art that, as the technology advances, the inventive concept can be implemented in various ways. The invention and its embodiments are not limited to the examples described above but may vary within the scope of the claims.

### Clauses

A method for controlling user communications in a communications system, comprising:
defining and storing a pair of a sender address and a user address;
defining and storing an action and a usage rule for said pair of sender address and user address;
sending, for said pair of sender address and user address, from said sender address to said user address a message prompting communication back to said sender address;
receiving a communication to said sender address;
checking whether a pair of a user address from which said communication is received and said sender address to which said communication is received, match any defined and stored pair of sender address and user address; and
if a match is found, performing an action defined for said matching pair of said system address and said user address, and metering said received communication and said performed action according to said usage rule defined for said matching pair of said system address and said user address.

The above method, comprising:
defining and storing a plurality of pairs of different sender addresses and said user address;
defining and storing an action and a usage rule for each of said plurality of pairs of different sender addresses and said user address; and
sending, for each of said plurality of pairs of different sender addresses and said user address, from said respective sender address to said user address a message prompting communication back to said respective sender address.

The above method, comprising:
defining and storing a plurality of pairs of said sender address and different user addresses;
defining and storing an action and a usage rule for each of said plurality of pairs of said sender address and said different user addresses; and
sending, for each of said plurality of pairs of said sender address and said different user addresses, from said sender address to said respective user address a message prompting communication back to said sender address.

The above method, wherein said sender address is a sender telephone number and said user address is a user telephone number.

The above method, wherein said defined action is routing of said received communication to a further routing address.

The above method, wherein said further routing address is a third party telephone number.

The above method, wherein at least one of said defined pairs of sender addresses and user addresses defines a one-time, temporary, semi-permanent or permanent toll-free access to a given further destination from a given user address.

The above method, wherein at least one of said prompting messages contains a question, and wherein said communication back to said sender number is a reply to the question, and said defined action is registering and/or reporting the reply.

The above method, wherein at least one of said prompting messages contains results of a search query initiated from said user address.

The above method, wherein said usage rules comprise rules for adjusting a charge applied in respect of said communication and/or said defined action.

The above method, wherein said adjusting comprises one or more of following: said communication and/or a defined action free of charge; said communication and/or said defined action with a discounted charge; said communication and/or said defined action with an extra benefit and/or service.

The above method, comprising applying a charge for said communication and/or said defined action to a third party.

The above method, comprising applying a service charge to a third party for each received communication and performed defined action.

The above method, wherein said third party is an advertiser or a service provider associated with said defined action.

The above method, comprising dynamically allocating said sender addresses to said user addresses from a predetermined limited sender address space such that the same sender address can be allocated at the same time to more than one sender address with different defined actions and with different usage rules.

The above method, comprising dynamically allocating said sender addresses to said user addresses from a predetermined limited address space with a round robin scheme.

The above method, wherein said allocation of a sender address to a user address is cancelled according to a predetermined criterion.

The above method, wherein said cancelling according to a predetermined criterium comprises one or more of the following: cancelling after a predetermined period of time; cancelling after single a communication; cancelling after a predetermined number of communications; canceling at a given time of a day or a week or a month or at a given date; canceling after using a given amount of time for communication; canceling after transferring a given amount of data; canceling after using a given amount of money for communication.

The above method, comprising selecting at least some of said user addresses based on one or more of the following information: a user profile; preferences of when to send messages; to which target group an advertisement is sent; on which format an advertisement is sent; a target price level of an advertisement; a target feedback level of the advertisement; a target audience; demographics of a target audience; a duration of a advertisement campaign, cost per an advertisement; type of an advertisement; a sociological background of a target audience; age; sex; a target telephone type; an income level; status of a user; a location of a user; historical data of a user's behavior; historical data on a behavior of a profile of users; information of sent direct advertisement to a user; information of content vouchers or coupons sent to a user; codes of vouchers or coupons sent to a user; a time of a day or a week or a month or a date.

The above method, comprising, if no match is found, rejecting the received communication, or performing a default action, or routing the received communication to a default routing address, and/or applying a charge for the received call according to default usage rules.

A computer program, particularly on a computer readable storage medium, comprising program code which, when executed on a computer device, performs the steps of the above method.

An apparatus for controlling user communications in a communications system, comprising:
means for receiving a communication from a user address to a sender address in a communications system;
means for checking from a database whether a pair of a user address from which said communication is received and said sender address to which said communication is received, match any of a plurality of previously defined pairs of a sender addresses and user addresses stored in a database, a matching previous defined pair indicating that a message prompting to communicate back to said respective sender address has been sent from said respective sender address to said respective user address; and
means, in response to finding a matching previous defined pair, for performing an action defined for said matching pair of said system address and said user address in said database, and applying a charge for said received communication and said performed action according to a usage rule defined for said matching pair of said system address and said user address in said database.

The above apparatus, further comprising:
means for defining and storing in said database said plurality of pairs of sender addresses and user addresses;
means for defining and storing in said database an action and a usage rule for each of said plurality of pairs of sender addresses and user addresses; and
means for sending, for each of said plurality of pairs of sender addresses and user addresses, from said respective sender address to said respective user address a message prompting to communicate back to said respective sender address.

The above apparatus, wherein said apparatus is situated in a network element in said communications network.

The above apparatus, wherein said apparatus is situated in a network element outside said communications network.

The above apparatus, wherein said apparatus is situated in a service gateway.

The above apparatus, further comprising means for performing the steps of the above method.

A billing system configured to communicate with the above apparatus and comprising means for adjusting the charge of said communication and/or a related action to the user according to instructions from said apparatus, if said communication is determined to be a consequence of one of said prompting messages previously sent.

The above billing system, comprising means for applying the adjusted charge of the communication and/or the performed action to a third party.

The above billing system, comprising means for applying a service charge to a third party for each received communication and performed defined action.

The above billing system, wherein said third party is an advertiser or a service provider associated with said defined action.

## Claims

1. A method for routing communications in a telecommunications network, comprising:
sending a plurality of messages to a plurality of user terminals, each of the messages containing a network identifier for triggering a communication;
for each sent message, creating and storing an association between a user terminal to which the message is sent and a respective network identifier;
receiving communications from the user terminals; and,
when a communication is received at a network location corresponding to a network identifier and from a user terminal for which a said association is stored, routing the communication to a predetermined destination.

2. A method according to claim 1, in which the predetermined destination to which a communication received at a network location address is routed is dependent on a user terminal from which the communication is received.

3. A method according to either of claim 1 and claim 2, in which a communication received at a given network location and at a user terminal for which no said association is stored is not routed to a predetermined destination.

4. A method according to any preceding claim, comprising adjusting a billing record such that a communication routed to a predetermined destination is sponsored by a party associated with said predetermined destination.

5. A method according to any preceding claim, in which at least one of said plurality of messages comprises content received from a party associated with a predetermined destination.

6. A method according to claim 5, comprising creating an association between the party from which content is received and a user terminal to which the content is sent.

7. A method according to any preceding claim, in which at least one of said network identifiers comprises a telephone number.

8. A method according to any preceding claim, in which at least one said predetermined destination is identified by a telephone number.

9. A method according to any preceding claim, in which at least one of said messages comprises an SMS message.

10. A method according to any preceding claim, in which at least one of said communications comprises a telephone call.

11. A method according to any preceding claim, in which storing an association comprises storing a network identifier of a user terminal.

12. An apparatus for routing communications in a telecommunications network, comprising:
sending means for sending a message to a user terminal, the message containing a network identifier for triggering a communication;
means for creating and storing an association between the user terminal and the network identifier;
means for receiving a first communication at a network location from the user terminal, the network location corresponding to said network identifier ;
means for routing said first communication to a predetermined destination, different to the network location, in response to determining that the network identifier and the user terminal correspond to said stored association.

13. An apparatus according to claim 12, wherein the predetermined destination to which a communication received at a network location address is routed is dependent on the user terminal from which the communication is received.

14. An apparatus according to either of claim 12 and claim 13, wherein the apparatus is arranged to cause a billing record to be updated such that a communication routed to a predetermined destination is sponsored by a party associated with said predetermined destination.

15. An apparatus according to any of claim 12 to claim 14, wherein the network identifier comprises a telephone number.

16. An apparatus according to any of claim 12 to claim 15, wherein the first communication comprises a telephone call.

17. An apparatus according to any of claim 12 to claim 16, wherein storing an association comprises storing a network identifier of the user terminal.

18. An apparatus for use in routing communications in a telecommunications network, the apparatus comprising storage means for storing an instruction for use in routing a communication to a predetermined destination, the communication being received at a network location from a user terminal, wherein the predetermined destination is different from said network location, and wherein a message has been sent to said user terminal, the message containing a network identifier for triggering a communication and said routing being performed in response to determining that there is an association stored in the storage means between the user terminal and the network identifier, the network identifier corresponding to the network location.

19. A computer program product containing executable instructions which, when implemented, cause a computing device to perform the method of any of claim 1 to claim 11.
